# EUROPEAN PATENT APPLICATION

(11) **EP 4 488 503 A1**
(43) Date of publication of application: **08.01.2025**
(21) Application number: 23759310.8
(22) Date of filing: 27.02.2023
(51) Int. Cl.: F03B 1/00, F03B 11/00

(54) **WATER-DISTRIBUTION PIPE**

(30) Priority: 28.02.2022 CN 202210184906
(71) Applicant: Dongfang Electric Machinery Co., Ltd. of Dongfang Electric Group, Deyang, Sichuan 618000 (CN)
(72) Inventor: LIANG, Quanwei, Deyang, Sichuan 618000 (CN); XIE, Kewei, Deyang, Sichuan 618000 (CN); ZHOU, Hengte, Deyang, Sichuan 618000 (CN); WAN, Bing, Deyang, Sichuan 618000 (CN); WANG, Gang, Deyang, Sichuan 618000 (CN); WU, Wei, Deyang, Sichuan 618000 (CN); WU, Zhongjing, Deyang, Sichuan 618000 (CN); DUAN, Changde, Deyang, Sichuan 618000 (CN); HU, Jiangyi, Deyang, Sichuan 618000 (CN)
(74) Representative: Patrade A/S
(86) International application number: PCT/CN2023/078355
(87) International publication number: WO 2023/160689

(57) **Abstract**

The present invention discloses a water-distribution pipe, comprising an upper casing (1) and a lower casing (2), the upper casing (1) and the lower casing (2) are connected to form a pipe body (3), wherein the water-distribution pipe further comprises a runner chamber (4) and angle-adjusting rings (5); the pipe body (3) is connected to a plurality of bifurcation pipes (6), which are connected to the runner chamber (4); a first fixing cap (7) is secured at the top of the pipe body (3), and a second fixing cap (8) is secured at the bottom of the pipe body (3); the first fixing cap (7) and the second fixing cap (8) are both located at the connection of the pipe body (3) and the bifurcation pipe (6), and a guide plate (9) is embedded between the first fixing cap (7) and the second fixing cap (8); the guide plate (9) has an inclined wedge-shaped cross-section; and the runner chamber (4) is provided with transition flanges (10), and the transition flanges (10) and the runner chamber (4) are connected by the angle-adjusting rings (5). The guide plate of the present water-distribution pipe can be replaced, so as to quickly change the hydraulic flow channel, adjusting the jet angle and changing runner with different pitch diameter for the model test, which greatly improves the convenience of the model test.

## Description

### FIELD OF TECHNOLOGY

The present invention relates to the technical field of a fluid machinery and engineering equipment, particularly, it relates to a water-distribution pipe.

### BACKGROUND

An impulse turbine is a type of hydraulic machinery that utilizes high-speed hydraulic flow to impinge on the turbine for converting the mechanical energy. The water-distribution pipe mainly guides inflow, while the bifurcated pipe guide plate can evenly distribute water flow within the water-distribution pipe and affect the quality of the outflow, thereby influencing the performance of the machinery unit. Currently, the bifurcated pipe guide plates and the water-distribution pipe both can be secured but not be replaced during processing of the water-distribution pipe, making it impossible to compare the effects of bifurcated pipe guide plate on the basis of experiments.

The Chinese patent CN102513960A, published on June 27, 2012, discloses an installation method for the water-distribution pipe of the impulse turbine, comprising the steps of:
(1) processing a supporting column and a measuring platform;
(2) placing the supporting column on a leveling grid inside a turbine casing and securely connecting them;
(3) placing the measuring platform on the supporting column and securely connecting them;
(4) installing a central bolt at the center of the measuring platform and installing peripheral bolts around the measuring platform, with nuts securely connecting them to the measuring platform, and all the ends of the bolts facing upwards;
(5) adjusting the ends of the central and peripheral bolts to their respective design heights;
(6) installing a steel angle bracket on the turbine casing along the horizontal centerline of the flange of water-distribution pipe, installing an adjusting bolt on the steel angle bracket and staking out the central point and height of the adjusting bolt;
(7) determining a vertical centerline of the flange using a plumb line;
(8) establishing a reference line linking one of end of the peripheral bolts to the end of the adjusting bolt, to position a design center of the flange on the reference line;
(9) adjusting an actual center of the flange to the design center based on the distance between the plumb line and the reference line;
(10) adjusting a levelness and a perpendicularity of the flange; and
(11) verifying whether the actual center of the flange aligns with the reference line; if the actual center of the flange aligns with the reference line, the installing method is completed; if the actual center of the flange deviates from the reference line, steps (4) to (10) are repeated until the actual center of the flange aligns with the reference line.

The installation method of the water-distribution pipe for the impulse turbine disclosed in the above-mentioned patent can accurately install all the water-distribution pipe for the impulse turbine, with simple operation and low cost. However, the bifurcated pipe guide plate is fixed during processing of the water-distribution pipe, which cannot be replaced, making it impossible to achieve the rapid change of the hydraulic flow channel, whereby it is not convenient to carry out model tests.

### SUMMARY

In order to overcome the defects of the prior art, the present invention provides a water-distribution pipe, wherein a bifurcated pipe guide plate of the present invention can be replaced, so as to quickly change the hydraulic flow channel, adjusting the jet angle and changing runner with different pitch diameter for the model test, which greatly improves the convenience of the model test.

The present invention is achieved by the following technical solutions:
a water-distribution pipe comprising an upper casing and a lower casing, the upper casing and the lower casing are connected to form a pipe body, wherein the water-distribution pipe further comprises a runner chamber and angle-adjusting rings; the pipe body is connected to a plurality of bifurcation pipes, which are connected to the runner chamber; a first fixing cap is secured at the top of the pipe body, and a second fixing cap is secured at the bottom of the pipe body; the first fixing cap and the second fixing cap are both located at the connection of the pipe body and the bifurcation pipe, and a guide plate is embedded between the first fixing cap and the second fixing cap; the guide plate has an inclined wedge-shaped cross-section; and the runner chamber is provided with transition flanges, and the transition flanges and the runner chamber are connected by the angle-adjusting rings.

The runner chamber has a separated structure, comprising an upper chamber and a lower chamber, wherein the upper chamber and the lower chamber are connected by bolts. The upper chamber corresponds to the upper casing and is connected with the upper casing, and the lower chamber corresponds to the lower casing and is connected with the lower casing.

There are five bifurcation pipes, which are evenly arranged along the circumference of the pipe body.

The runner chamber is a ring-shape, and the runner chamber is provided with through holes which are communicated with the bifurcation pipes.

The guide plate is provided with a sealing strip and is secured between the first fixing cap and the second fixing cap by means of the sealing strip.

The guide plate has a separated structure, comprising a first guide plate and a second guide plate, wherein the first guide plate is secured on the first fixing cap, and the second guide plate is secured on the second fixing cap.

A positioning boss is configured at the bottom of the first guide plate, and a positioning hole is configured on the top of the second guide plate for matching with the positioning boss, such that the positioning boss of the first guide plate is embedded into the positioning hole of the second guide plate.

There are six transition flanges, which are evenly distributed along the circumference of the runner chamber, and inner cavities of the transition flanges are communicated with inner cavities of the upper casing and the lower casing of the water- distribution pipe, respectively.

The present invention has the following advantages:
1. In the present invention, the pipe body is connected to a plurality of bifurcation pipes which are connected to the runner chamber. A first fixing cap is secured at the top of the pipe body, a second fixing cap is secured at the bottom of the pipe body, and a bifurcation plate is embedded between the first fixing cap and the second fixing cap. The guide plate has an inclined wedge-shaped cross-section. The runner chamber is provided with transition flanges, and the transition flanges and the runner chamber are connected by the angle-adjusting rings. Therefore, quick changes of the hydraulic flow channel can be achieved by replacing the bifurcation plate, so as to adjust the jet angle and change the runner with different pitch diameter for the model test, thereby improving the convenience for the model test.
2. In the present invention, the runner chamber has a separated structure, comprising an upper chamber and lower chamber, wherein the upper chamber and the lower chamber are connected by bolts. The upper chamber corresponds to the upper casing and is connected with the upper casing, and the lower chamber corresponds to the lower casing and is connected with the lower casing, which facilitates the processing of the internal profile, and is helpful for improving the precision of the flow channel.
3. In the present invention, there are five bifurcation pipes, which are evenly arranged along the circumference of the pipe body, facilitating the completion of the hydraulic design test for a plurality of bifurcation pipes.
4. In the present invention, the runner chamber is a ring-shape, and the runner chamber is provided with through holes being communicated with the bifurcation pipes, facilitating quick completion of the hydraulic design test.
5. In the present invention, the guide plate is provided with a sealing strip and is secured between the first fixing cap and the second fixing cap by means of the sealing strip, possessing a great airtightness and effectively preventing water leakage.
6. In the present invention, the guide plate has a separated structure, comprising a first guide plate and a second guide plate, wherein the first guide plate is secured on the first fixing cap, and the second guide plate is secured on the second fixing cap, facilitating manufacturing and processing, thereby improving installation convenience.
7. In the present invention, a positioning boss is configured at the bottom of the first guide plate, and a positioning hole is configured on the top of the second guide plate for matching with the positioning boss, such that the positioning boss of the first guide plate is embedded into the positioning hole of the second guide plate, which effectively prevents the installation misalignment of the first guide plate and the second guide plate, and guarantees that the first guide plate and the second guide plate are tightly connected.
8. In the prevent invention, there are six transition flanges, which are evenly distributed along the circumference of the runner chamber, and inner cavities of the transition flanges are communicated with inner cavities of the upper casing and the lower casing of the water-distribution pipe, respectively, and an angle of the transition flange is adjusted by the angle-adjusting ring to affect the angle of flange export. With the angle of flange export being adjusted, runner with different pitch diameter can be matched, thereby achieving better applicability.

### BRIEF DESCRIPTION OF FIGURES

The accompanying drawings are combined with specific embodiments of the invention for further explanation as below, wherein:
Figure 1 shows a schematic view of the water-distribution pipe structure of the present invention;
Figure 2 shows a sectional view of the water-distribution pipe of the present invention;
Figure 3 shows a schematic view of the structure of the guide plate of the present invention;
Figure 4 shows a schematic cross-section of the guide plate of the present invention;
Figure 5 shows a sectional view of the transition flange of the present invention;

List of reference characters:
1-upper casing
2-lower casing
3-pipe body
4-runner chamber
5-angle-adjusting ring
6-bifurcation pipe
7- first fixing cap
8-second fixing cap
9- guide plate
10-transition flange
11-upper chamber
12-lower-chamber
13- through hole
14-sealing strip
15-first guide plate
16-second guide plate
17- positioning boss
18-positioning hole

### DETAILED DESCRIPTION

### Embodiment 1

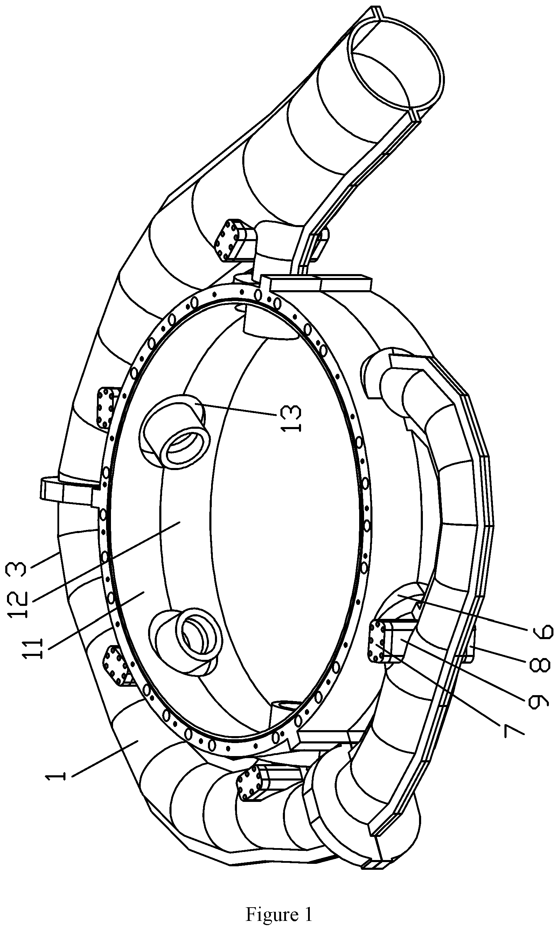

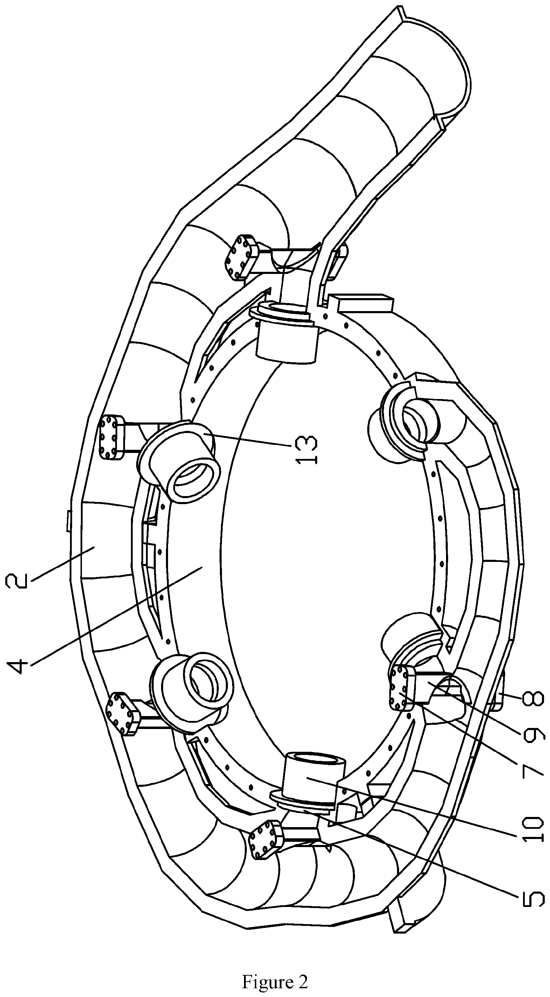

Referring to Figure 1 and Figure 2, a water-distribution pipe comprises an upper casing 1 and a lower casing 2, the upper casing 1 and the lower casing 2 are connected to form a pipe body 3, and the water-distribution pipe further comprises a runner chamber 4 and angle-adjusting rings 5. The pipe body 3 is connected to a plurality of bifurcation pipes 6, which are connected to the runner chamber 4. A first fixing cap 7 is secured at the top of the pipe body 3, and a second fixing cap 8 is secured at the bottom of the pipe body 3. The first fixing cap 7 and the second fixing cap 8 are both located at the connection of the pipe body 3 and the bifurcation pipe 6, and a guide plate 9 is embedded between the first fixing cap 7 and the second fixing cap 8. The guide plate 9 has an inclined wedge-shaped cross-section. The runner chamber 4 is provided with transition flanges 10, and the transition flanges 10 and the runner chamber 4 are connected by the angle-adjusting rings 5.

This is a most basic embodiment, wherein the pipe body 3 is connected with a plurality of bifurcation pipes 6, which are connected to the runner chamber 4. A first fixing cap 7 is secured at the top of the pipe body 3, and a second fixing cap 8 is secured at the bottom of the pipe body 3. The first fixing cap 7 and the second fixing cap 8 are both located at the connection of the pipe body 3 and the bifurcation pipe 6, and a guide plate 9 is embedded between the first fixing cap 7 and the second fixing cap 8. The guide plate 9 has an inclined wedge-shaped cross-section. The runner chamber 4 is provided with transition flanges 10, and the transition flanges 10 and the runner chamber 4 are connected by the angle-adjusting rings 5, by replacing the guide plate 9, so as to quickly change the hydraulic flow channel, adjusting the jet angle and replacing the runner with different pitch diameter for the model test, which greatly improves the convenience of the model test.

### Embodiment 2

Referring to Figure 1 and Figure 2, a water-distribution pipe comprises an upper casing 1 and a lower casing 2, the upper casing 1 and the lower casing 2 are connected to form a pipe body 3, and the water-distribution pipe further comprises a runner chamber 4 and angle-adjusting rings 5. The pipe body 3 is connected to a plurality of bifurcation pipes 6, which are connected to the runner chamber 4. A first fixing cap 7 is secured at the top of the pipe body 3, and a second fixing cap 8 is secured at the bottom of the pipe body 3. The first fixing cap 7 and the second fixing cap 8 are both located at the connection of the pipe body 3 and the bifurcation pipe 6, and a guide plate 9 is embedded between the first fixing cap 7 and the second fixing cap 8. The guide plate 9 has an inclined wedge-shaped cross-section. The runner chamber 4 is provided with transition flanges 10, and the transition flanges 10 and the runner chamber 4 are connected by the angle-adjusting rings 5.

Further, the runner chamber 4 has a separated structure, comprising an upper chamber 11 and a lower chamber 12, wherein the upper chamber 11 and the lower chamber 12 are connected by bolts. The upper chamber 11 corresponds to the upper casing 1 and is connected with the upper casing 1, and the lower chamber 12 corresponds to the lower casing 2 and is connected with the lower casing 2.

This is a preferred embodiment, wherein the runner chamber 4 has a separated structure, comprising an upper chamber 11 and a lower chamber 12, wherein the upper chamber 11 and the lower chamber 12 are connected by bolts. The upper chamber 11 corresponds to the upper casing 1 and is connected with the upper casing 1, and the lower chamber 12 corresponds to the lower casing 2 and is connected with the lower casing 2, which facilitates the processing of the internal profile, and is helpful for improving the precision of the flow channel.

### Embodiment 3

Referring to Figure 1 and Figure 2, a water-distribution pipe comprises an upper casing 1 and a lower casing 2, the upper casing 1 and the lower casing 2 are connected to form a pipe body 3, and the water-distribution pipe further comprises a runner chamber 4 and angle-adjusting rings 5. The pipe body 3 is connected to a plurality of bifurcation pipes 6, which are connected to the runner chamber 4. A first fixing cap 7 is secured at the top of the pipe body 3, and a second fixing cap 8 is secured at the bottom of the pipe body 3. The first fixing cap 7 and the second fixing cap 8 are both located at the connection of the pipe body 3 and the bifurcation pipe 6, and a guide plate 9 is embedded between the first fixing cap 7 and the second fixing cap 8. The guide plate 9 has an inclined wedge-shaped cross-section. The runner chamber 4 is provided with transition flanges 10, and the transition flanges 10 and the runner chamber 4 are connected by the angle-adjusting rings 5.

The runner chamber 4 has a separated structure, comprising an upper chamber 11 and a lower chamber 12, wherein the upper chamber 11 and the lower chamber 12 are connected by bolts. The upper chamber 11 corresponds to the upper casing 1 and is connected with the upper casing 1, and the lower chamber 12 corresponds to the lower casing 2 and is connected with the lower casing 2.

Further, there are five bifurcation pipes 6, which are evenly arranged along the circumference of the pipe body 3.

This is another preferred embodiment, wherein there are five bifurcation pipes 6, which are evenly arranged along the circumference of the pipe body 3, facilitating the completion of the hydraulic design test of the plurality of guide plates 9.

### Embodiment 4

Referring to Figure 1 and Figure 2, a water-distribution pipe comprises an upper casing 1 and a lower casing 2, the upper casing 1 and the lower casing 2 are connected to form a pipe body 3, and the water-distribution pipe further comprises a runner chamber 4 and angle-adjusting rings 5. The pipe body 3 is connected to a plurality of bifurcation pipes 6, which are connected to the runner chamber 4. A first fixing cap 7 is secured at the top of the pipe body 3, and a second fixing cap 8 is secured at the bottom of the pipe body 3. The first fixing cap 7 and the second fixing cap 8 are both located at the connection of the pipe body 3 and the bifurcation pipe 6, and a guide plate 9 is embedded between the first fixing cap 7 and the second fixing cap 8. The guide plate 9 has an inclined wedge-shaped cross-section. The runner chamber 4 is provided with transition flanges 10, and the transition flanges 10 and the runner chamber 4 are connected by the angle-adjusting rings 5.

The runner chamber 4 has a separated structure, comprising an upper chamber 11 and a lower chamber 12, wherein the upper chamber 11 and the lower chamber 12 are connected by bolts. The upper chamber 11 corresponds to the upper casing 1 and is connected with the upper casing 1, and the lower chamber 12 corresponds to the lower casing 2 and is connected with the lower casing 2. There are five bifurcation pipes 6, which are evenly arranged along the circumference of the pipe body 3.

Further, the runner chamber 4 is a ring-shape, and the runner chamber 4 is provided with through holes 13 which are communicated with the bifurcation pipes 6.

This is also another preferred embodiment, wherein the runner chamber 4 is a ring-shape, and the runner chamber 4 is provided with through holes 13 which are communicated with the bifurcation pipes 6, facilitating quick completion of the hydraulic design test.

### Embodiment 5

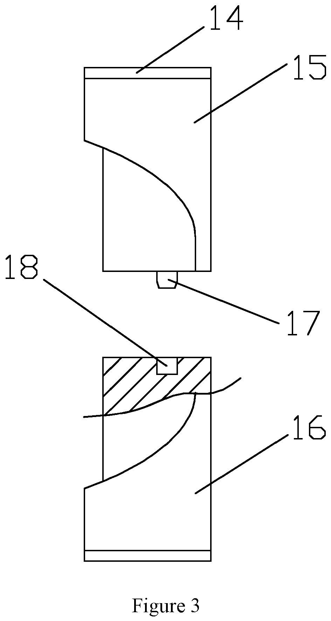

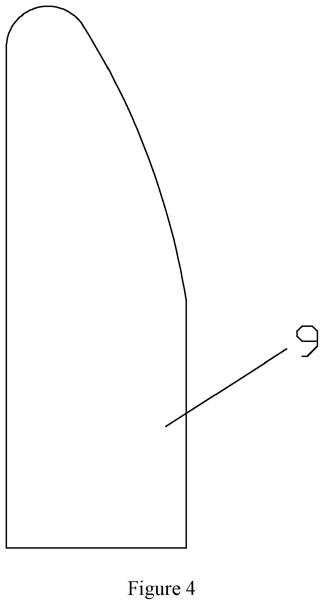

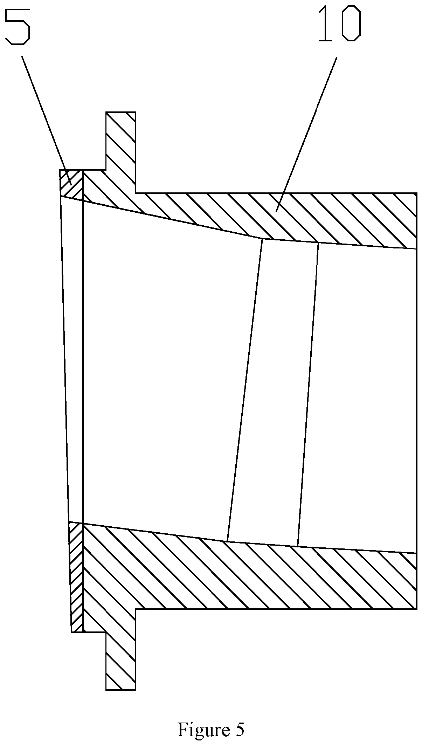

Referring to Figure 1 to Figure 5, a water-distribution pipe comprises an upper casing 1 and a lower casing 2, the upper casing 1 and the lower casing 2 are connected to form a pipe body 3, and the water-distribution pipe further comprises a runner chamber 4 and angle-adjusting rings 5. The pipe body 3 is connected to a plurality of bifurcation pipes 6, which are connected to the runner chamber 4. A first fixing cap 7 is secured at the top of the pipe body 3, and a second fixing cap 8 is secured at the bottom of the pipe body 3. The first fixing cap 7 and the second fixing cap 8 are both located at the connection of the pipe body 3 and the bifurcation pipe 6, and a guide plate 9 is embedded between the first fixing cap 7 and the second fixing cap 8. The guide plate 9 has an inclined wedge-shaped cross-section. The runner chamber 4 is provided with transition flanges 10, and the transition flanges 10 and the runner chamber 4 are connected by the angle-adjusting rings 5.

The runner chamber 4 has a separated structure, comprising an upper chamber 11 and a lower chamber 12, wherein the upper chamber 11 and the lower chamber 12 are connected by bolts. The upper chamber 11 corresponds to the upper casing 1 and is connected with the upper casing 1, and the lower chamber 12 corresponds to the lower casing 2 and is connected with the lower casing 2.

There are five bifurcation pipes 6, which are evenly arranged along the circumference of the pipe body 3.

Further, the runner chamber 4 is a ring-shape, and the runner chamber 4 is provided with through holes 13 are communicated with the bifurcation pipes 6. The guide plate 9 is provided with a sealing strip 14 and is secured between the first fixing cap 7 and the second fixing cap 8 by means of the sealing strip 14.

This is another preferred embodiment, wherein the guide plate 9 is provided with a sealing strip 14 and is secured between the first fixing cap 7 and the second fixing cap 8 by means of the sealing strip 14, possessing a great airtightness and effectively preventing water leakage.

### Embodiment 6

Referring to Figure 1 to Figure 5, a water-distribution pipe comprises an upper casing 1 and a lower casing 2, the upper casing 1 and the lower casing 2 are connected to form a pipe body 3, and the water-distribution pipe further comprises a runner chamber 4 and angle-adjusting rings 5. The pipe body 3 is connected to a plurality of bifurcation pipes 6, which are connected to the runner chamber 4. A first fixing cap 7 is secured at the top of the pipe body 3, and a second fixing cap 8 is secured at the bottom of the pipe body 3. The first fixing cap 7 and the second fixing cap 8 are both located at the connection of the pipe body 3 and the bifurcation pipe 6, and a guide plate 9 is embedded between the first fixing cap 7 and the second fixing cap 8. The guide plate 9 has an inclined wedge-shaped cross-section. The runner chamber 4 is provided with transition flanges 10, and the transition flanges 10 and the runner chamber 4 are connected by the angle-adjusting rings 5.

The runner chamber 4 has a separated structure, comprising an upper chamber 11 and a lower chamber 12, wherein the upper chamber 11 and the lower chamber 12 are connected by bolts. The upper chamber 11 corresponds to the upper casing 1 and is connected with the upper casing 1, and the lower chamber 12 corresponds to the lower casing 2 and is connected with the lower casing 2. There are five bifurcation pipes 6, which are evenly arranged along the circumference of the pipe body 3. The runner chamber 4 is a ring-shape, and the runner chamber 4 is provided with through holes 13 which are communicated with the bifurcation pipes 6.

The guide plate 9 is provided with a sealing strip 14 and is secured between the first fixing cap 7 and the second fixing cap 8 by means of the sealing strip 14.

Further, the guide plate 9 has a separated structure, comprising a first guide plate 15 and a second guide plate 16, wherein the first guide plate 15 is secured on the first fixing cap 7, and the second guide plate 16 is secured on the second fixing cap 8.

This is another preferred embodiment, wherein the bifurcation plate 9 has a separated structure, comprising a first guide plate 15 and a second guide plate 16, wherein the first guide plate 15 is secured on the first fixing cap 7, and the second guide plate 16 is secured on the second fixing cap 8, which facilitates the processing and the manufacturing and is helpful for improving the installation convenience.

### Embodiment 7

Referring to Figure 1 to Figure 5, a water-distribution pipe comprises an upper casing 1 and a lower casing 2, the upper casing 1 and the lower casing 2 are connected to form a pipe body 3, and the water-distribution pipe further comprises a runner chamber 4 and angle-adjusting rings 5. The pipe body 3 is connected to a plurality of bifurcation pipes 6, which are connected to the runner chamber 4. A first fixing cap 7 is secured at the top of the pipe body 3, and a second fixing cap 8 is secured at the bottom of the pipe body 3. The first fixing cap 7 and the second fixing cap 8 are both located at the connection of the pipe body 3 and the bifurcation pipe 6, and a guide plate 9 is embedded between the first fixing cap 7 and the second fixing cap 8. The guide plate 9 has an inclined wedge-shaped cross-section. The runner chamber 4 is provided with transition flanges 10, and the transition flanges 10 and the runner chamber 4 are connected by the angle-adjusting rings 5.

The runner chamber 4 has a separated structure, comprising an upper chamber 11 and a lower chamber 12, wherein the upper chamber 11 and the lower chamber 12 are connected by bolts. The upper chamber 11 corresponds to the upper casing 1 and is connected with the upper casing 1, and the lower chamber 12 corresponds to the lower casing 2 and is connected with the lower casing 2.

There are five bifurcation pipes 6, which are evenly arranged along the circumference of the pipe body 3.

The runner chamber 4 is a ring-shape, and the runner chamber 4 is provided with through holes 13which are communicated with the bifurcation pipes 6.

The guide plate 9 is provided with a sealing strip 14 and is secured between the first fixing cap 7 and the second fixing cap 8 by means of the sealing strip 14.

The guide plate 9 has a separated structure, comprising a first guide plate 15 and a second guide plate 16, wherein the first guide plate 15 is secured on the first fixing cap 7, and the second guide plate 16 is secured on the second fixing cap 8.

Further, a positioning boss 17 is configured at the bottom of the first guide plate 15, and a positioning hole 18 is configured on the top of the second guide plate 16 for matching with the positioning boss 17, such that the positioning boss 17 of the first guide plate 15 is embedded into the positioning hole 18 of the second guide plate 16.

This is another preferred embodiment, wherein a positioning boss 17 is configured at the bottom of the first guide plate 15, and a positioning hole 18 is configured on the top of the second guide plate 16 for matching with the positioning boss 17, such that the positioning boss 17 of the first guide plate 15 is embedded into the positioning hole 18 of the second guide plate 16, which effectively prevents the installation misalignment of the first guide plate 15 and the second guide plate 16, and guarantees that the first guide plate 15 and the second guide plate 16 are tightly connected.

### Embodiment 8

Referring to Figure 1 to Figure 5, a water-distribution pipe comprises an upper casing 1 and a lower casing 2, the upper casing 1 and the lower casing 2 are connected to form a pipe body 3, and the water-distribution pipe further comprises a runner chamber 4 and angle-adjusting rings 5. The pipe body 3 is connected to a plurality of bifurcation pipes 6, which are connected to the runner chamber 4. A first fixing cap 7 is secured at the top of the pipe body 3, and a second fixing cap 8 is secured at the bottom of the pipe body 3. The first fixing cap 7 and the second fixing cap 8 are both located at the connection of the pipe body 3 and the bifurcation pipe 6, and a guide plate 9 is embedded between the first fixing cap 7 and the second fixing cap 8. The guide plate 9 has an inclined wedge-shaped cross-section. The runner chamber 4 is provided with transition flanges 10, and the transition flanges 10 and the runner chamber 4 are connected by the angle-adjusting rings 5.

The runner chamber 4 has a separated structure, comprising an upper chamber 11 and a lower chamber 12, wherein the upper chamber 11 and the lower chamber 12 are connected by bolts. The upper chamber 11 corresponds to the upper casing 1 and is connected with the upper casing 1, and the lower chamber 12 corresponds to the lower casing 2 and is connected with the lower casing 2.

There are five bifurcation pipes 6, which are evenly arranged along the circumference of the pipe body 3.

The runner chamber 4 is a ring-shape, and the runner chamber 4 is provided with through holes 13 which are communicated with the bifurcation pipes 6.

The guide plate 9 is provided with a sealing strip 14 and is secured between the first fixing cap 7 and the second fixing cap 8 by means of the sealing strip 14.

The guide plate 9 has a separated structure, comprising a first guide plate 15 and a second guide plate 16, wherein the first guide plate 15 is secured on the first fixing cap 7, and the secondguide 16 is secured on the second fixing cap 8.

Further, a positioning boss 17 is configured at the bottom of the first guide plate 15, and a positioning hole 18 is configured on the top of the second guide plate 16 for matching with the positioning boss 17, such that the positioning boss 17 of the first guide plate 15 is embedded into the positioning hole 18 of the second guide plate 16.

Further, there are six transition flanges 10, which are evenly distributed along the circumference of the runner chamber 4, and inner cavities of the transition flanges 10 are communicated with inner cavities of the upper casing 1 and the lower casing 2 of the water-distribution pipe, respectively.

This embodiment is the best way to implement, wherein there are six transition flanges 10, which are evenly distributed along the circumference of the runner chamber 4, and inner cavities of the transition flanges 10 are communicated with inner cavities of the upper casing 1 and the lower casing 2 of the water-distribution pipe, respectively. and an angle of the transition flange 10 is adjusted by the angle-adjusting ring 5 to affect the angle of flange export. With the angle of flange export being adjusted, runner with different pitch diameter can be matched, thereby achieving better applicability.

## Claims

1. A water-distribution pipe, comprising an upper casing (1) and a lower casing (2), the upper casing (1) and the lower casing (2) being connected to form a pipe body (3), **characterized in that**, the water-distribution pipe further comprises a runner chamber (4) and angle-adjusting rings (5); the pipe body (3) is connected to a plurality of bifurcation pipes (6), which are connected to the runner chamber (4); a first fixing cap (7) is secured at a top of the pipe body (3), and a second fixing cap (8) is secured at a bottom of the pipe body (3); the first fixing cap (7)and the second fixing cap (8) are both located at the connection of the pipe body (3) and the bifurcation pipe (6), and a guide plate (9) is embedded between the first fixing cap (7) and the second fixing cap (8); the guide plate (9) has an inclined wedge-shaped cross-section; and the runner chamber (4) is provided with transition flanges (10), and the transition flanges (10) and the runner chamber (4) are connected by the angle-adjusting rings (5).

2. The water-distribution pipe of claim 1, **characterized in that**, the runner chamber (4) has a separated structure, comprising an upper chamber (11) and a lower chamber (12), wherein the upper chamber (11) and the lower chamber (12) are connected by bolts; the upper chamber (11) corresponds to the upper casing (1) and is connected with the upper casing (1), and the lower chamber (12) corresponds to the lower casing (2) and is connected with the lower casing (2).

3. The water-distribution pipe of claim 1, **characterized in that**, there are five bifurcation pipes (6), which are evenly arranged along the circumference of the pipe body (3).

4. The water-distribution pipe of claim 1, **characterized in that**, the runner chamber (4) is a ring-shape, and the runner chamber (4) is provided with through holes (13) which are communicated with the bifurcation pipes (6).

5. The water-distribution pipe of claim 1, **characterized in that**, the guide plate (9) is provided with a sealing strip (14) and is secured between the first fixing cap (7) and the second fixing cap (8) by means of the sealing strip (14).

6. The water-distribution pipe of claim 1, **characterized in that**, the guide plate (9) has a separated structure, comprising a first guide plate (15) and a second guide plate (16), wherein the first guide plate (15) is secured on the first fixing cap (7), and the second guide plate (16) is secured on the second fixing cap (8).

7. The water-distribution pipe of claim 6, **characterized in that**, a positioning boss (17) is configured at a bottom of the first guide plate (15), and a positioning hole (18) is configured on a top of the second guide plate (16) for matching with the positioning boss (17), such that the positioning boss (17) of the first guide plate (15) is embedded into the positioning hole (18) of the second guide plate (16).

8. The water-distribution pipe of claim 1, **characterized in that**, there are six transition flanges (10), which are evenly distributed along the circumference of the runner chamber (4), and inner cavities of the transition flanges (10) are communicated with inner cavities of the upper casing (1) and the lower casing (2) of the water-distribution pipe, respectively.
